# FASCICULE DE BREVET EUROPEEN

(11) **EP 0 507 759 B1**
(45) Date de publication et mention de la délivrance du brevet: **19.11.1997**
(21) Numéro de dépôt: 92870037.6
(22) Date de dépôt: 06.03.1992
(51) Int. Cl.: A01C 23/02

(54) **Enfouisseur de lisier à pression constante**
Düngereinbringer mit konstantem Drück
Applicator for liquid manure with constant pressure

(30) Priorité: 28.03.1991 BE 9100287
(43) Date de publication de la demande: 07.10.1992
(73) Titulaire: Ets JOSKIN S.A., B-4634 Soumagne (BE)
(72) Inventeur: Joskin, Victor, B-4634 Soumagne (BE)
(74) Mandataire: Van Malderen, Michel

(56) Documents cités:
- EP-A- 0 055 501
- DE-A- 4 021 266
- FR-A- 2 185 306
- FR-A- 2 611 687
- US-A- 3 875 876

## Description

La présente invention est relative à l'enfouissement du lisier ou autres engrais dans le gazon ou sous une couche de terre et concerne en particulier un système automatique maintenant une pression constante en cours de travail sur tout système de puissance hydraulique destinée à enfoncer un injecteur de lisier dans des terrains agricoles.

On connaît divers systèmes d'équipement pour l'injection du lisier (par exemple comme décrit dans DE-A-4021266) mais jusqu'à présent tous les systèmes travaillent avec une certaine pression sur le matériel d'injection tout en ne gardant pas cette même pression lors de variations de hauteur de travail. Aucun système connu ne règle automatiquement cette pression lors du travail.

Le but de l'invention est d'obtenir une profondeur d'injection régulière par un suivi des terrains à dénivellations irrégulières grâce à la mise au point d'un système automatique hydraulique à pression constante permettant de commander en automatique trois fonctions hydrauliques supplémentaires et cela avec réglage voulu au moment désiré de l'entrée en fonction.

Le système automatique à pression constante suivant l'invention est caractérisé en ce qu'il consiste avec un seul système hydraulique en une mise en série de plusieurs fonctions hydrauliques combinées en un seul bloc, tel que spécifié dans la revendication 1.

Pour mieux faire comprendre l'invention celle-ci est décrite avec plus de détails à titre d'exemple dans les dessins annexés montrant en :
Figures 1 à 3 des vues de profil d'un enfouisseur de lisier raccordé à une citerne tractée, respectivement sur terrain plat et sur terrains accidentés ;
Figure 4 un schéma du système hydraulique à plusieurs fonctions réunies dans un seul bloc.

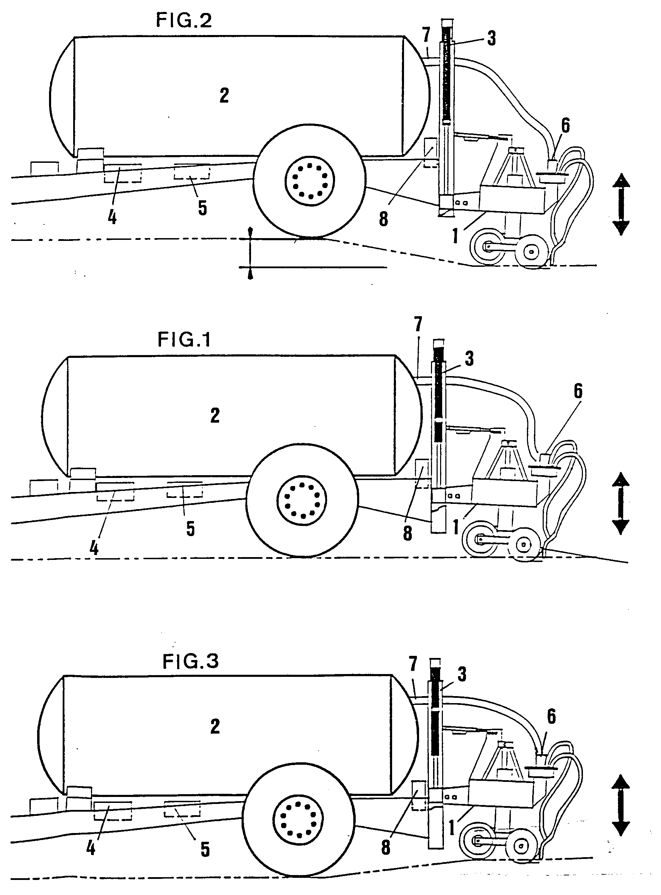

On voit aux dessins en figures 1 à 3 un enfouisseur de lisier 1 entraîne derrière une citerne 2 et relié à celui-ci avec interposition d'un système de levage tel, qu'un vérin de clark 3 à double effet, alimenté à partir d'un réservoir d'huile 4 par un distributeur hydraulique 5 monté sur la citerne 2. L'enfouisseur 1 comporte un moteur de répartiteur de lisier 6 relié à une vanne 7 d'ouverture d'alimentation en lisier.

Le distributeur hydraulique 4 par le vérin 3, maintenu en pression constante pendant le travail, permet de descendre la machine pour l'injection et de la remonter pour le transport. Il permet aussi quel que soit le terrain, dans lequel doit être enfoui le lisier, de suivre les dénivellations du terrain, comme représenté dans les figures 2 et 3.

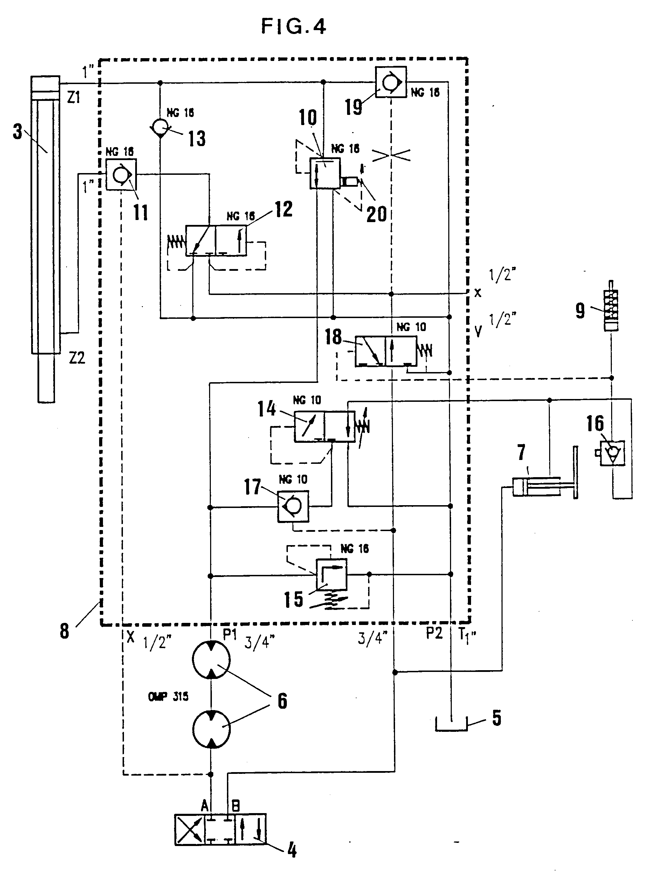

Tout le système hydraulique suivant l'invention est combiné dans un seul bloc 8, tel que représenté en figure 4. Ce bloc combiné 8, travaillant uniquement avec la variation des pressions hydrauliques, permet simultanément au moment où la machine entre dans le sol d'ouvrir ou de fermer un vérin de pincettes antigouttes 9 à simple effet, d'ouvrir la vanne 7 pour l'arrivée du lisier vers le système d'injection ou d'épandage et d'actionner le ou les moteurs répartiteurs de lisier 6.

Le système hydraulique consiste dans le passage de l'huile dans les moteurs hydrauliques répartiteurs 6. En même temps, l'huile pilote un clapet antiretour 11, qui lui-même permet à l'huile de passer dans un clapet pilote 12 à trois voies à travers un antiretour simple 13 et ensuite vers le vérin 3, qui est maintenu en pression constante automatique. Le vérin 3 étant mis dans la position choisie, un clapet de réduction de pression 10 se place en position centrale.

La pression arrivant, suivant réglage, à environ 60 bar, un clapet à trois voies 14 est piloté, le vérin de pincettes antigouttes 9 s'ouvre et le vérin 7 se referme pour laisser libre le passage du lisier ; la pression arrivant ensuite, suivant réglage, à environ 80 bar, l'huile passe par un clapet de surpression 15 et retourne vers le réservoir d'huile 6.

Lorsque l'injecteur de lisier doit sortir du sol pour le transport ou le changement de ligné, le vérin 7 d'ouverture et de fermeture de l'arrivée du lisier vers l'injecteur ferme la vanne au moment où celle-ci arrive contre un clapet antiretour 16 ; le vérin de pincettes antigoutes 9 se ferme par un système de ressort et, en même temps, un clapet pilote 17 est piloté pour permettre le retour de l'huile du vérin 7. Lorsque le vérin 7 est ouvert complètement, la pression tombe et permet alors, par l'intermédiaire d'un clapet à trois voies pilote 18 de piloter un clapet pilote 19, qui autorise le relevage de l'injecteur avec le vérin de clark 3. Le relevage s'effectue sans devoir couper la prise de force de la machine ou du tracteur.

Grâce à l'invention on obtient avec un seul système hydraulique une mise en série de plusieurs fonctions hydrauliques.

Par le clapet de réduction de pression 10 et le réglage de pression 20 on obtient une pression réglable et constante sur le vérin de clark 3.

On peut grâce à l'invention obtenir deux pressions différentes : une pour le clark, par le vérin 10, et une pour les autres fonctions hydrauliques.

### LISTE DES REPERES

- 1.: Injecteur
- 2.: Réservoir de lisier
- 3.: Vérin de clark
- 4.: Distributeur hydraulique
- 5.: Réservoir d'huile
- 6.: Moteur de répartition de lisier
- 7.: Vérin d'ouverture d'alimentation
- 8.: Bloc combiné
- 9.: Vérin de pincettes antigouttes
- 10.: Clapet de réduction de pression
- 11.: Clapet pilote antiretour
- 12.: Clapet pilote à trois voies
- 13.: Antiretour simple
- 14.: Clapet trois voies
- 15.: Clapet de surpression
- 16.: Clapet antiretour
- 17.: Clapet pilote
- 18.: Clapet à trois voies pilote
- 19.: Clapet pilote
- 20.: Réglage de pression

## Revendications

1. Système automatique consistant en un vérin de clark (3) ou autre système de levage et un bloc hydraulique de commande (8), maintenant une pression en cours de travail sur tout système de puissance hydraulique, destiné en particulier à enfoncer un injecteur de lisier (1) dans des terrains à dénivellations irrégulières, caractérisé en ce que :
- le bloc hydraulique (8) est constitué d'un seul bloc hydraulique et comporte plusieurs clapets pilotés (11, 17, 19) et plusieurs clapets pilotés à trois voies (12, 14, 18), pilotables par des pressions pilotes à différents niveaux, mettant en série plusieurs fonctions hydrauliques; et
- le bloc hydraulique (8) comporte un clapet de réduction de pression (10) associé à un régulateur de pression (20), de sorte que le système automatique maintient une pression constante en cours de travail sur ledit système de puissance hydraulique.

2. Système automatique suivant la revendication 1, caractérisé en ce que le bloc combiné (8) comporte en outre un clapet de surpression (15) et un clapet de réduction de pression (10), un antiretour simple (8) et un clapet antiretour (16).

3. Système automatique suivant les revendications 1 et 2, caractérisé en ce que le bloc combiné (8) travaille uniquement avec la variation des pressions hydrauliques et permet d'ouvrir et de fermer le vérin des pincettes antigouttes (9) de l'injecteur (1), d'ouvrir le vérin d'alimentation de lisier (7) vers le système d'injection ou d'épandage (1) et simultanément d'actionner le ou les moteurs répartiteurs de lisier (6).

## Claims

1. An automatic system comprising a clark jack (3) or other lifting system and a control hydraulic block (8) maintaining a pressure when being working on any hydraulic power system intended in particular to introduce a manure injector (1) into a soil having irregular relief variations, characterised in that :
the hydraulic block (8) consists in one hydraulic block only and comprises a plurality of control valves (11, 17, 19) and a plurality of three-port control valves (12, 14, 18) controlled by control pressures at different levels that arrange several hydraulic functions in series; and
the hydraulic block (8) includes a pressure reduction valve (10) associated to a pressure regulator (20) whereby the automatic system maintains a constant pressure when being working on said hydraulic power system.

2. An automatic system according to claim 1, characterised in that the control block (8) further includes an overpressure valve (15) and a pressure reduction valve (10), a simple reverse-lock (8) and a non-return valve (16).

3. An automatic system according to claim 1 or 2, characterised in that the control block (8) works only with the hydraulic pressure variations and allows opening and closure of the antidrop pincers jack (9) of the injector (1), opening of the manure feeding jack (7) towards the injection or spreading system (1) and simultaneously driving the manure distributor motor(s) (6).

## Patentansprüche

1. Automatisches System, bestehend aus einem Clark-Hubzylinder (3) oder einem anderen Hebesystem und einem hydraulischen Steuerblock (8), der während der Arbeit einen Druck auf jedem hydraulischen Karaftsystem aufrechterhält, das insbesondere dazu bestimmt ist, einen Düngereinspritzer (1) in Bodenbereiche mit unregelmäßigen Niveauunterschieden abzusenken, dadurch gekennzeichnet, daß
- der hydraulische Block (8) von einem einzigen hydraulischen Block gebildet ist, und er mehrere Steuerventile (11, 17, 19) und mehrere Dreiwegesteuerventile (12, 14, 18) aufweist, die von Fernsteuerdrücken auf verschiedenen Ebenen fernsteuerbar sind, wodurch mehrere hydraulische Funktionen hintereinandergesetzt werden; und
- der hydraulische Block (8) ein Druckrduzierungsventil (10), das mit einem Druckregler (20) verbunden ist, aufweist, so daß das automatische System während der Arbeit einen konstanten Druck auf dem hydraulischen Kraftsystem aufrechterhält.

2. Automatisches System gemäß Anspruch 1, dadurch gekennzeichnet, daß der kombinerte Block (8) ein Überdruckventil (15) und ein Druckreduzierungsventil (10), eine einfache Rückschlagsicherung (8) und ein Rückschlagventil (16) aufweist.

3. Automatisches System gemäß den Ansprüchen 1 und 2, dadurch gekennzeichnet, daß der kombinierte Block (8) ausschließlich mit der Änderung der hydraulischen Drücke arbeitet und erlaubt, den Antitropfklemmzylinder (9) des Einspritzers (1) zu öffnen und zu schließen, den Zufuhrzylinder des Düngers (7) zum Einspritz- oder Düngerstreusystem (1) hin zu öffnen und gleichzeitig den oder die Düngerverteilungsmotoren (6) anzutreiben.
